# EUROPÄISCHE PATENTSCHRIFT

(11) **EP 0 944 517 B1**
(45) Veröffentlichungstag und Bekanntmachung des Hinweises auf die Patenterteilung: **22.11.2000**
(21) Anmeldenummer: 97946718.0
(22) Anmeldetag: 16.12.1997
(51) Int. Cl.: B62H 3/04

(54) **FAHRRADSTÄNDER**
BICYCLE STAND
SUPPORT POUR BICYCLETTES

(30) Priorität: 23.12.1996 CH 317296
(43) Veröffentlichungstag der Anmeldung: 29.09.1999
(73) Patentinhaber: Hug, Max, 6003 Luzern (CH)
(72) Erfinder: Hug, Max, 6003 Luzern (CH)
(74) Vertreter: Volpert, Marcus, Dr.
(86) Internationale Anmeldenummer: CH9700467
(87) Internationale Veröffentlichungsnummer: WO9828181

(56) Entgegenhaltungen:
- CH-A- 193 203
- FR-A- 2 466 226
- US-A- 5 553 715

## Beschreibung

Die Erfindung betrifft einen Fahrradständer gemäss dem Oberbegriff des Patentanspruchs 1.

Abstellplätze für Fahrräder, welche beispielsweise bei Bahnhöfen, Geschäfts- oder Mehrfamilienhäusern liegen, sind häufig mit Fahrradständern ausgerüstet, welche einen stabilen Stand der abgestellten Fahrräder gewährleisten. Zwar sind die Fahrräder normalerweise mit einer nach unten klappbaren Stütze versehen, mit deren Hilfe sie in stehender Lage gehalten werden können. Mit derartigen Stützen kann jedoch nur eine ungenügende Standfestigkeit erreicht werden.

An den bekannten Fahrradständern werden die Fahrräder normalerweise mit ihrem Vorderrad befestigt. Das Vorderrad eines Fahrrades wird dabei entweder am Fahrradständer eingeklemmt oder aufgehängt.
Die herkömmlichen Fahrradständer bieten jedoch keinen Schutz gegen Diebstahl. Die Fahrräder müssen daher zusätzlich mit separaten Diebstahlsicherungen abgesichert werden. Normalerweise blockieren derartige Diebstahlsicherungen eines der beiden Räder eines Fahrrades. Sie können mit geeigneten Hilfsmitteln gewaltsam geöffnet werden und bieten folglich nur einen geringen Schutz gegen Diebstahl. In der Praxis kommt es auch vor, dass Fahrräder mit blockierten Rädern einfach wegtransportiert werden.
Viele Fahrradfahrer versuchten hier Abhilfe zu schaffen, indem sie das Vorderrad mit einer Diebstahlsicherung am Fahrradständer fixierten. Dies nützt allerdings auch nicht sehr viel, da in diesem Fall die Möglichkeit besteht, das Vorderrad vom Fahrradrahmen zu lösen und das Fahrrad einfach ohne Vorderrad zu stehlen.
Einen relativ sicheren Schutz gegen Diebstahl bieten verschliessbare Boxen, welche ein einziges Fahrrad aufnehmen können. Derartige Boxen werden beispielsweise an Bahnhöfen eingesetzt. Die Herstellungskosten von Fahrradboxen dieser Art sind jedoch sehr hoch. Damit sie wirtschaftlich betrieben werden können, müssen entsprechend hohe Benützungsgebühren verlangt werden. Die Benützung der Fahrradboxen wird dadurch unattraktiv.

Die vorliegende Erfindung stellt sich nun die Aufgabe, einen kostengünstigen Fahrradständer zu schaffen, welcher ein diebstahlsicheres Abstellen von Fahrrädern ermöglicht.

Die Aufgabe wird mit Hilfe der erfindungsgemässen Merkmale des Patentanspruchs 1 gelöst. Vorteilhafte Weiterbildungen der Erfindung sind Gegenstand der abhängigen Ansprüche.

Der vorgeschlagene Fahrradständer weist ein Traggestell auf, an dem mindestens ein Befestigungselement für ein Fahrrad angebracht ist. Das Traggestell besteht aus einem Tragrohr, welches an beiden Enden durch je eine Konsole abgestützt ist. Jedes Befestigungselement umfasst eine Führungsschiene, einen Hebel und einen Schwenkarm. Die Führungsschiene ist an einem Ende mit einer Buchse am Tragrohr des Traggestells fixiert. Am anderen Ende der Führungsschiene ist der Hebel schwenkbar befestigt. Er bildet in nach oben geklapptem Zustand die Verlängerung der Führungsschiene. Der Schwenkarm ist mit einem Endabschnitt etwa auf halber Länge der Führungsschiene schwenkbar befestigt. Ein Gestänge verbindet diesen Endabschnitt mit dem Hebel. Derjenige Endabschnitt des Schwenkarms, welcher der Befestigungsstelle abgewandt ist, trägt eine Vorrichtung zur abschliessbaren Befestigung des Schwenkarmes am Fahrradrahmen.
Um ein Fahrrad mit Hilfe des vorgeschlagenen Fahrradständers abzustellen, wird sein Vorderrad auf die Führungsschiene aufgesetzt und auf dieser Führungsschiene in die Richtung des Hebels gerollt. Sobald das Vorderrad auf dem Hebel aufliegt, wird dieser durch das Gewicht des Fahrrades nach unten gedrückt. Die Bewegung des Hebels wird über das Gestänge auf den Schwenkarm übertragen. Dieser wird folglich nach oben so weit in die Richtung des Fahrradrahmens geschwenkt, bis die Befestigungsvorrichtung am Fahrradrahmen fixiert und abgeschlossen werden kann.
Die Erfindung wird im folgenden anhand eines Ausführungsbeispiels näher erläutert. Sie ist unter anderem auch in den Zeichnungen beschrieben. Es zeigen:
- Fig. 1a: eine Seitenansicht eines vorgeschlagenen Fahrradständers mit annähernd horizontal verlaufender Führungsschiene, welcher ein Fahrrad festhält;
- Fig. 1b: eine Seitenansicht eines vorgeschlagenen Fahrradständers mit schräg nach oben verlaufender Führungsschiene, welcher ein Fahrrad festhält;
- Fig. 2a: eine Aufsicht auf eine Konsole und ein Befestigungselement eines vorgeschlagenen Fahrradständers mit annähernd horizontal verlaufender Führungsschiene und nach oben geschwenktem Hebel;
- Fig. 2b: eine Vorderansicht des Befestigungselementes gemäss Fig. 2a;
- Fig. 2c: eine Seitenansicht des Fahrradständers gemäss Fig. 2a;
- Fig. 3a: eine Aufsicht auf eine Konsole und ein Befestigungselement eines vorgeschlagenen Fahrradständers mit annähernd horizontal verlaufender Führungsschiene und nach unten geschwenktem Hebel;
- Fig. 3b: eine Vorderansicht des Befestigungselementes gemäss Fig. 3a;
- Fig. 3c: eine Seitenansicht des Fahrradständers gemäss Fig. 3a und
- Fig. 4: eine Aufsicht auf eine Anlage mit zwei Fahrradständern, wobei jeder Fahrradständer neun Befestigungselemente aufweist.

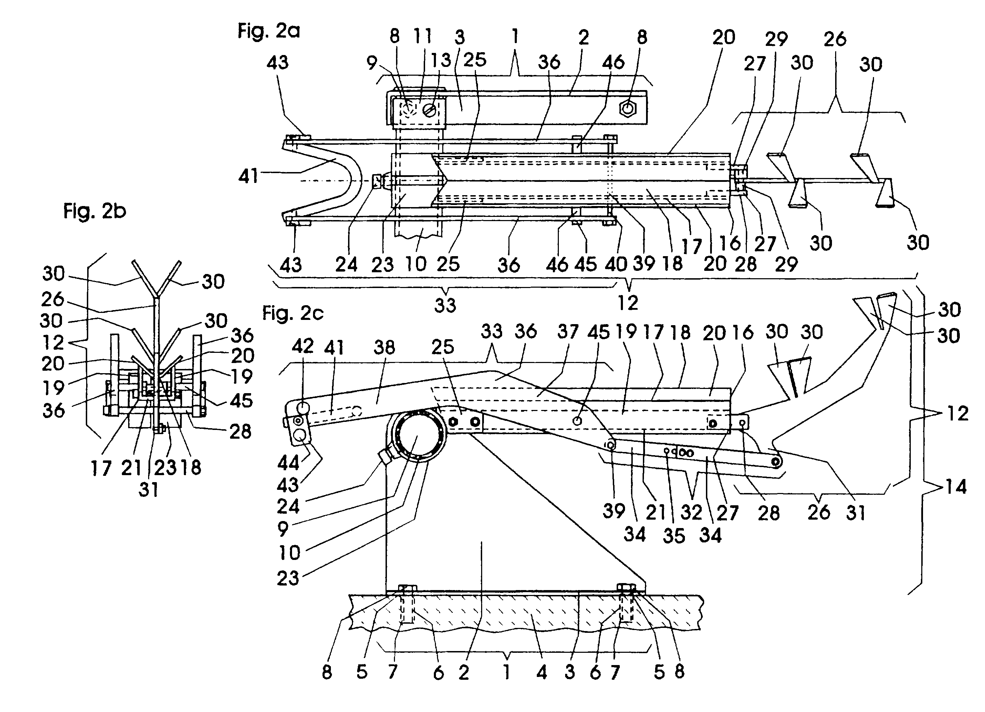

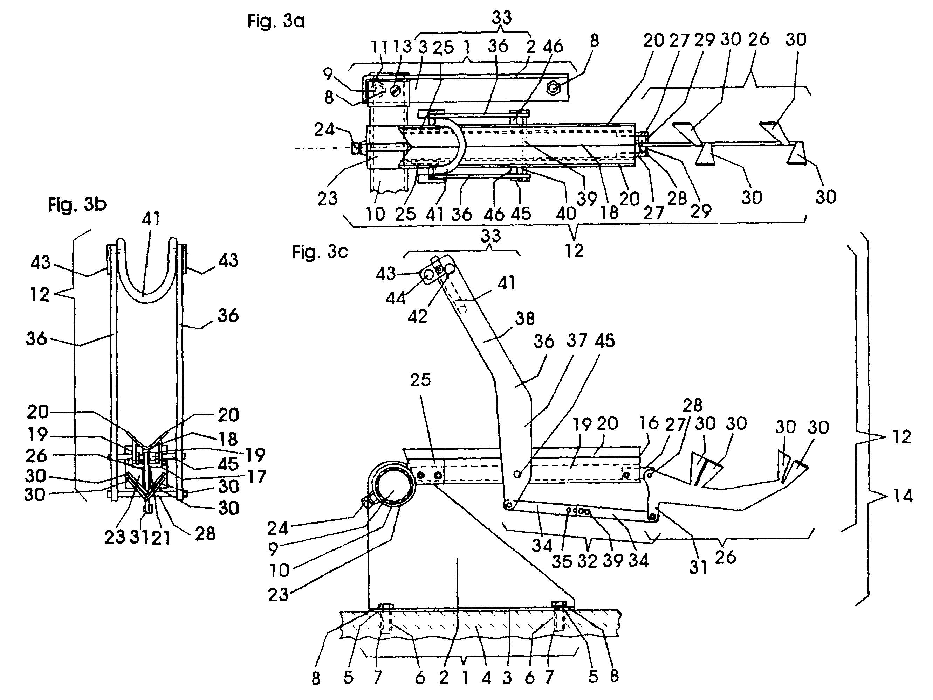

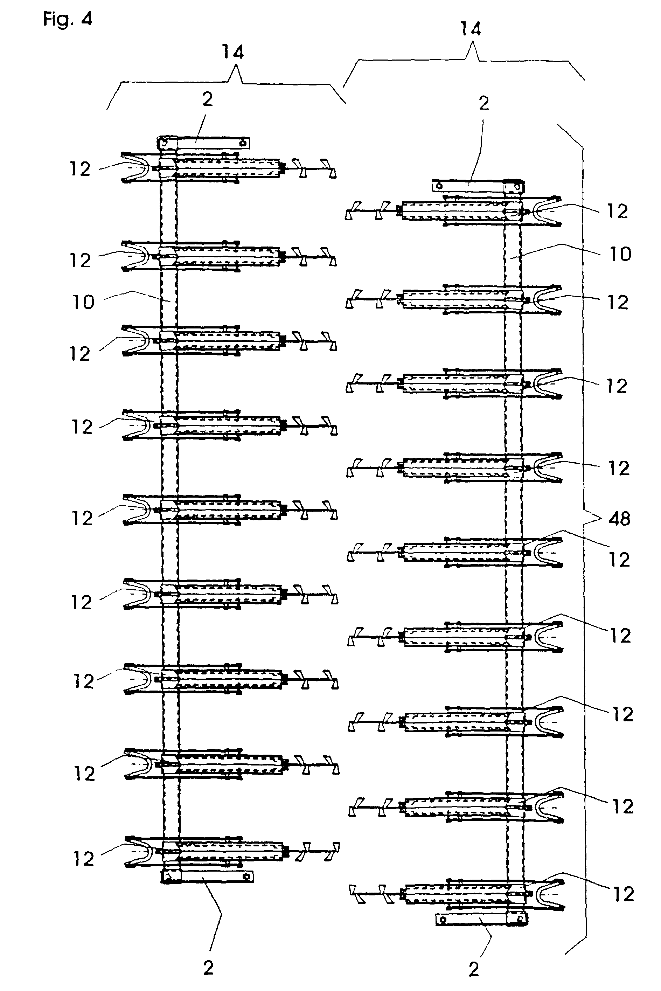

Die beiden Konsolen 2 des Traggestells 1 werden beim Ausführungsbeispiel durch eine vorzugsweise verzinkte Metallplatte mit der Form eines rechtwinkligen Dreiecks gebildet, wobei in den Fig. 2a und 3a lediglich eine Konsole gezeigt ist. Der Randabschnitt an der Basisseite der Metallplatte ist rechtwinklig umgebogen (vgl. Fig. 2a, 2c, 3a und 3c). Dadurch entsteht eine Art Standfuss 3. Zur Befestigung an einem harten Untergrund 4, wie z.B. einer Betonplatte oder eine Asphaltschicht, weist dieser Standfuss 3 mindestens zwei runde, durchgehende Löcher 5 auf. Die Löcher 5 liegen vorzugsweise in je einem Endabschnitt des Standfusses 3. Der Untergrund wird mit zwei Bohrungen 6 versehen, in welche je ein Dübel 7 eingesetzt wird. Zur Befestigung einer Konsole 2 wird durch jedes Loch 5 im Standfuss 3 eine Schraube 8 gesteckt und in den entsprechenden Dübel 7 eingeschraubt. Der Eckbereich der Metallplatte, welche dem harten Untergrund 4 abgewandt ist, ist mit einem runden, durchgehenden Loch 9 versehen, dessen Durchmesser dem Aussendurchmesser des Tragrohres 10 entspricht. Im Bereich dieses Loches 9 ist an der Metallplatte eine Buchse 11 befestigt. Der Innendurchmesser dieser Buchse 11 entspricht dem Durchmesser des Loches 9. Der Innenraum der Buchse 11 fluchtet mit dem Loch 9. Die Buchse 11 besteht vorzugsweise ebenfalls aus Eisen, so dass sie an der Metallplatte festgeschweisst werden kann. Die Konsolen 2 sind beim Ausführungsbeispiel etwa 25 cm hoch.
Die beiden Konsolen 2 eines Traggestells 1 sind parallel und unversetzt zueinander angeordnet (vgl. Fig. 4). Der Abstand zwischen ihnen ist etwas kleiner als die Länge des Tragrohres 10 und hängt von der Anzahl der Befestigungselemente 12 ab, welche am Tragrohr 10 angebracht sind.
Die beiden Endabschnitte des Tragrohrs 10 werden in die Buchse 11 und das Loch 9 einer Konsole 2 eingefügt und mit Hilfe von mindestens je einer Klemmschraube 13 befestigt. Die beiden Buchsen 11 sind für die Aufnahme der Klemmschrauben 13 mit mindestens je einer radial verlaufenden Gewindebohrung versehen.
Am Tragrohr 10 ist mindestens ein Befestigungselement 12 für ein Fahrrad 15 angebracht. Vorzugsweise trägt das Tragrohr 10 eine Vielzahl von Befestigungselementen 12 (vgl. Fig. 4), so dass am Fahrradständer 14 mehrere Fahrräder 15 befestigt werden können.

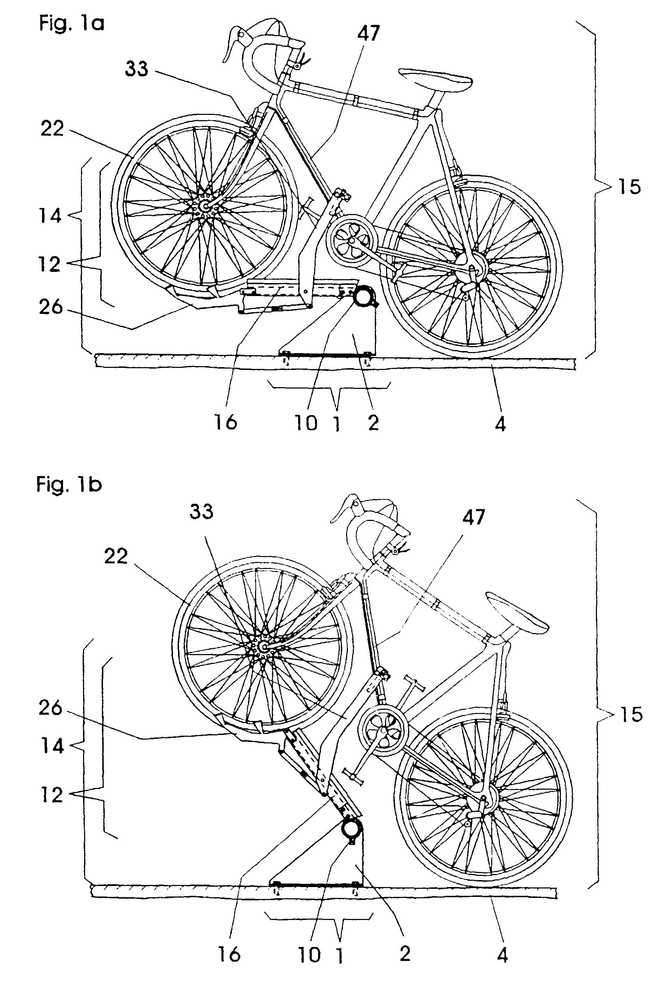

Die Führungsschiene 16 eines Befestigungselementes 12 besteht aus einer U-Profilleiste 17 und einer L-Profilleiste 18 aus Metall. Die beiden Schenkel 19 der U-Profilleiste 17 sind nach oben gerichtet. Die beiden Schenkel 20 der L-Profilleiste 18 sind gleich breit. Die L-Profilleiste 18 ist derartig auf die Schenkel 19 der U-Profilleiste 17 aufgesetzt, dass die Aussenseite ihrer Schenkel 20 auf den oberen Stirnseiten der U-Profilleistenschenkel 19 aufliegen und die Längskante zwischen den beiden L-Profilleistenschenkeln 20 der Grundseite 21 der U-Profilleiste 17 zugewandt ist (vgl. Fig. 2b). Diese Längskante liegt ausserdem in der gedachten, längsverlaufenden Flächenhalbierenden der U-Profilleistengrundseite 21. Die beiden Schenkel 20 der L-Profilleiste 18 bilden somit eine Art Rille, in welcher das Vorderrad 22 eines Fahrrades 15 geführt wird (vgl. Fig. 1a und 1b). Beim Ausführungsbeispiel ist die Führungsschiene 16 etwa 40 cm lang.
An einem Ende trägt die Führungsschiene 16 eine Buchse 23. Diese Buchse 23 dient zur Befestigung des Befestigungselementes 12 am Tragrohr 10. Die Buchse 23 weist mindestens eine Gewindebohrung zur Aufnahme einer Klemmschraube 24 auf. Um eine stabile Verbindung zwischen der Buchse 23 und der Führungsschiene 16 zu erhalten, sind an der Oberfläche der Buchse 23 zwei Verbindungsplatten 25 befestigt, vorzugsweise angeschweisst. Diese beiden Verbindungsplatten 25 verlaufen parallel zu den Buchsenstirnseiten. Ihr Abstand entspricht der Breite der U-Profilleiste 17, so dass der entsprechende Endabschnitt der U-Profilleiste 17 zwischen die beiden Verbindungsplatten 25 eingefügt werden kann. Die Verbindungsplatten 25 liegen dann an der Aussenseite der beiden U-Profilleistenschenkel 19 an und sind mit Schrauben an diesen befestigt.
Die Lage eines Befestigungselementes 12 kann beliebig eingestellt werden, indem man die Klemmschraube 24 löst, die Buchse 23 so weit dreht, bis sich die Führungsschiene 16 in der gewünschten Lage befindet, und danach die Klemmschraube 24 wieder anzieht. Beim Fahrradständer 14, welcher in Fig. 1a sowie 2a bis 4 dargestellt ist, verläuft die Führungsschiene 16 der Befestigungselemente 12 im wesentlichen horizontal.

Beim Fahrradständer 14, welcher in Fig. 1b abgebildet ist, verläuft die Führungsschiene 16 hingegen schräg nach oben. An dem der Buchse 23 abgewandten, vorderen Endabschnitt der Führungsschiene 16 ist der Hebel 26 schwenkbar befestigt (vgl. Fig. 2a, 2c, 3a und 3c). Dieser Hebel 26 besteht aus einer langgezogenen, leicht sichelförmigen Metallplatte. Die Befestigungsvorrichtung für den Hebel 26 besteht aus zwei kleinen Metallplatten 27, welche auf der Innenseite je eines Schenkels 19 der U-Profilleiste 17 anliegen. Jede Metallplatte 27 ist mit mindestens einer Schraube am entsprechenden Schenkel 19 fixiert. Die Metallplatten 27 ragen an der vorderen Stirnseite der U-Profilleiste 17 hervor. An diesen hervorragenden Abschnitten weist jede Metallplatte 27 zur Lagerung einer Schwenkachse 28 ein durchgehendes, rundes Loch auf. Die beiden Endabschnitte der Schwenkachse 28 ragen in je eines dieser Löcher hinein. Der Hebel 26 weist in seinem hinteren Endabschnitt, nahe der Oberkante ebenfalls ein rundes, durchgehendes Loch auf, dessen Durchmesser dem Durchmesser der Schwenkachse 28 entspricht. Die Schwenkachse 28 verläuft durch dieses Loch hindurch. Zwischen den beiden Metallplatten 27 und dem Hebel 26 ist je ein hohlzylinderförmiger Abstandhalter 29 auf die Schwenkachse 28 aufgeschoben (vgl. Fig. 2a und 3a). Diese Abstandhalter 29 verhindern ein seitliches Verrutschen des Hebels 26 und halten diesen gleichzeitig in vertikaler Lage. An der oberen Kante des Hebels 26 stehen zwei Paar Führungsflügel 30 ab. Das eine Führungsflügelpaar ist am vorderen Ende, das zweite Führungsflügelpaar in der hinteren Hälfte des Hebels 26 angeordnet. Die Führungsflügel 30 sind in bezug auf die Oberfläche der Metallplatte nach aussen geneigt. Der Neigungswinkel zur Vertikalen liegt vorzugsweise zwischen 30° und 45°. Die beiden Führungsflügel 30 eines Flügelpaares sind dabei gerade in entgegengesetzter Richtung geneigt, so dass sie eine V-förmige Halterung bilden. Die beiden Halterungen dienen zum Festhalten des Pneus und der Felge des Vorderrades 22 eines Fahrrades 15. Die Gesamtlänge des Hebels 26 misst beim Ausführungsbeispiel etwa 30 cm.
Der Hebel 26 weist in seinem hinteren Endabschnitt an der Unterkante einen weiteren langgezogenen Vorsprung 31 auf. Am unteren Ende dieses Vorsprungs ist das Gestänge 32, welches den Hebel 26 mit dem Schwenkarm 33 verbindet, mit einer Schraube schwenkbar befestigt. Dieses Gestänge 32 besteht aus zwei Metalleisten 34, welche koaxial zueinander angeordnet sind. Jede dieser beiden Metalleisten 34 weist in einem Endabschnitt mehrere, in regelmässigen Abständen angeordnete, durchgehende Bohrungen 35 auf. Die Endabschnitte der beiden Metalleisten 34 sind derartig übereinander gelegt, dass die Bohrungen 35 der beiden Metalleisten 34 paarweise miteinander fluchten (vgl. Fig. 2c und 3c). Zur Befestigung der beiden Metalleisten 34 aneinander werden in die miteinander fluchtenden Bohrungen 35 Schrauben eingefügt und mittels Schraubenmuttern fixiert. Die Gesamtlänge des Gestänges 32 kann verändert werden, indem man die Länge der sich überlappenden Abschnitte der beiden Metalleisten 34 verändert. Die Gesamtlänge des Gestänges 32 definiert die Endpositionen des Hebels 26 und des Schwenkarms 33.
Der Schwenkarm 33 besteht aus zwei langgezogenen Metallplatten 36. Jede Metallplatte 36 ist in zwei etwa gleichlange Abschnitte 37, 38 gegliedert, welche gegeneinander leicht abgewinkelt sind. Die beiden Abschnitte 37, 38 verlaufen etwa in einem Winkel von 30° zueinander. Der vordere Abschnitt 37 jeder Metallplatte 36 ist dabei etwas breiter als der hintere Abschnitt 38. Der hintere Endabschnitt jeder Metallplatte 36 verjüngt sich. Die Länge einer Metallplatte 36 beträgt beim Ausführungsbeispiel etwa 40 cm. Die beiden Metallplatten 36 sind parallel und unversetzt zueinander angeordnet. Der Abstand zwischen den beiden Metallplatten 36 entspricht beim Ausführungsbeispiel etwa 130% der Breite der Führungsschiene 16.
Am vorderen Ende sind beide Metallplatten 36 durch eine Schraube 39 miteinander verbunden. Jede Metallplatte 36 weist in ihrem vorderen Endabschnitt eine durchgehende Bohrung auf, durch welche die Schraube 39 hindurchragt. An dieser Schraube 39 ist gleichzeitig auch das hintere Ende des Gestänges 32 befestigt. Die hintere Metalleiste 34 des Gestänges 32 weist in seinem hinteren Endabschnitt ebenfalls eine durchgehende Bohrung auf, durch welche die Schraube 39 hindurchverläuft. Zwischen dem Gestänge 32 und den beiden Metallplatten 36 ist je ein rohrförmiger Abstandhalter 40 auf die Schraube 39 aufgeschoben. Dieser Abstandhalter 40 verhindert einerseits, dass das Gestänge 32 seitlich verrutscht und hält andererseits die beiden Metallplatten 36 des Schwenkarmes 33 im richtigen Abstand zueinander.
Am hinteren Ende sind die beiden Metallplatten 36 durch einen kunststoffbeschichteten Metallbügel 41 miteinander verbunden. Die beiden Schenkel des Metallbügels 41 sind am hinteren Endabschnitt je einer Metallplatte 36 angeschraubt. Jeder Schenkel weist dafür in seinem Endabschnitt eine durchgehende Bohrung auf. Der Bügel 41 verläuft parallel zur Unterkante der hinteren Plattenabschnitte 38 und ist gegen vorne gerichtet. Er bildet einen Teil der Vorrichtung, mit welcher der Schwenkarm 33 am Fahrradrahmen befestigt wird. Diese Vorrichtung wird durch je eine Bohrung 42 im hinteren Endabschnitt jeder Metallplatte 36 und durch zwei kleine Plättchen 43 ergänzt. Je eines dieser Plättchen 43 ist an der Aussenseite des hinteren Endabschnitts jeder Metallplatte 36 derartig festgeschraubt, dass es an der unteren Schmalseite der Metallplatte 36 teilweise hervorragt. Im hervorragenden Abschnitt ist jedes Plättchen 43 mit einer durchgehenden Bohrung 44 versehen.
Der Schwenkarm 33 ist mit einer Achse 45 an der Führungsschiene 16 schwenkbar befestigt. Die Achse 45 ist etwa auf halber Länge der Führungsschiene 16 angeordnet und verläuft quer durch die beiden Schenkel 19 der U-Profilleiste 17 der Führungsschiene 16. Die beiden Metallplatten 36 des Schwenkarmes 33 weisen in ihrem vorderen Endabschnitt je eine durchgehende Bohrung auf, in welche je ein Endabschnitt der Schwenkachse 45 eingefügt ist. Zwischen jeder Metallplatte 36 und dem zugewandten Schenkel 19 der U-Profilleiste 17 ist ein hohlzylindrischer Abstandhalter 46 auf die Schwenkachse 45 aufgesteckt. Diese Abstandhalter 46 zentrieren den Schwenkarm 33 in bezug auf die Führungsschiene 16.

Der vorgeschlagene Fahrradständer 14 arbeitet in der folgenden Art und Weise:
In unbenütztem Zustand befindet sich der Hebel 26 in nach oben geschwenkter und der Schwenkarm 33 in nach unten geschwenkter Position. Um ein Fahrrad 15 an einem Befestigungselement 12 zu befestigen, stellt man sein Vorderrad 22 auf die Führungsschiene 16 und rollt dieses so weit nach vorne bis es auf dem Hebel 26 aufliegt und durch die Führungsflügel 30 des Hebels 26 festgehalten wird. Durch das Gewicht des Fahrrades 15 wird der Hebel 26 nach unten gedrückt. Die Schwenkbewegung des Hebels 26 wird über das Gestänge 32 auf den Schwenkarm 33 übertragen. Dieser wird dadurch so weit nach oben geschwenkt, bis sein Bügel 41 an derjenigen Stange 47 des Fahrradrahmens anliegt, welche das Lenkerführungsrohr mit der Buchse des Tretlagers verbindet. Der Bügel 41 umfasst diese Stange 47 teilweise. Der Schwenkarm 33 wird jetzt an der Stange 47 befestigt, indem durch die beiden Bohrungen 42 in den Metallplatten 36 oder in die beiden Bohrungen 44 der Plättchen 43 des Schwenkarmes 33 ein (nicht gezeigtes) Steckschloss eingefügt und abgeschlossen wird. Welches der beiden Lochpaare man verwendet, hängt vom Durchmesser der Stange 47 ab.
Der vorgeschlagene Fahrradständer 14 schützt folglich den Fahrradrahmen und auch das Vorderrad 22, welches fest im Hebel 26 sitzt, vor Diebstahl. Zur Sicherung des Hinterrades kann gegebenenfalls ein herkömmliches Fahrradschloss verwendet werden.

Es besteht die Möglichkeit, zwei oder mehr der vorgeschlagenen Fahrradständer 14 zu einer Abstellanlage zusammenzustellen. In Fig. 4 ist eine Abstellanlage 48 für Fahrräder dargestellt, welche aus zwei Fahrradständern 14 mit je neun Befestigungselementen 12 besteht. Die beiden Fahrradständer 14 sind parallel und leicht versetzt zueinander angeordnet. Die Vorderseiten der Befestigungselemente 12 der beiden Fahrradständer 14 sind einander zugewandt. In einer derartigen Anlage finden insgesamt 18 Fahrräder 15 Platz. Die Anlage mit den abgestellten Fahrrädern 15 ist dabei lediglich 3 Meter lang und 3 Meter breit und belegt somit eine Fläche von nur 9 m².
Im weiteren besteht die Möglichkeit, mehrere Fahrradständer in einer Linie aufzustellen. Dabei kann jede Konsole 2, welche nicht an einer Aussenseite der Anlage liegt, zur Befestigung der Tragrohre 10 der jeweils aneinander angrenzenden Fahrradständer 14 dienen. An der Aussenseite jeder Konsole 2 wird dafür eine zweite (nicht gezeigte) Buchse angeschweisst. Ausserdem können die Fahrradständer 14 gemäss den Fig. 1a und lb abwechselnd an dem Tragrohr 10 des Traggestells 1 befestigt sein, um ein Einschieben bzw. Entnehmen nebeneinander angeordneter Fahrräder zu erleichtern.

Der vorgeschlagene Fahrradständer 14 weist gegenüber herkömmlichen Fahrradständern den grossen Vorteil auf, dass er nicht nur das Vorderrad 22, sondern auch den Rahmen der Fahrräder 15 abschliessbar festhält. Er bietet daher einen sicheren Schutz vor Diebstahl. Im Vergleich zu den bekannten Fahrradboxen hat der vorgeschlagene Fahrradständer 14 den grossen Vorteil, dass seine Herstellung kostengünstiger ist.
Die erfindungsgemässen Vorteile eines besseren Diebstahlschutzes können auch erzielt werden, wenn der Hebel 26 starr an der Führungsschiene 16 befestigt und folglich nicht über das Gestänge 32 mit dem Schwenkarm 33 verbunden ist. In diesem Fall wird der Schwenkarm 33 nach dem Einsetzen des Fahrrades 15 in den Fahrradständer 14 von Hand zum Fahrradrahmen geschwenkt und an diesem gesichert.

Dank dieser Vorteile wird der vorgeschlagene Fahrradständer 14 auf dem Markt auf grosses Interesse stossen.

## Patentansprüche

1. Fahrradständer
mit einem Traggestell (1) zum Abstützen zumindest eines Teils eines Fahrrades (15),
**gekennzeichnet durch**
mindestens ein Befestigungselement (12), das eine am Traggestell (1) befestigte, zumindest einen Teil eines Rades des Fahrrades (15) aufnehmende Führungsschiene (16) und einen schwenkbar an der Führungsschiene (16) befestigten Schwenkarm (33) mit einer Vorrichtung (41 - 44) zur abschliessbaren Befestigung des Schwenkarms (33) am Fahrradrahmen aufweist.

2. Fahrradständer nach Anspruch 1, **dadurch gekennzeichnet,** dass der in Einschiebrichtung des Fahrrades (15) in den Fahrradständer (14) vordere Teil der Führungsschiene als schwenkbar am hinteren Teil der Führungsschiene (16) befestigter Hebel (26) ausgebildet ist, der mit dem Schwenkarm (33) verbunden ist.

3. Fahrradständer nach Anspruch 2, **dadurch gekennzeichnet,** dass der Schwenkarm (33) mit einem Endabschnitt am hinteren Teil der Führungsschiene (16) befestigt und dieser Endabschnitt über ein Gestänge (32) mit dem Hebel (26) verbunden ist.

4. Fahrradständer nach Anspruch 2 oder 3, **dadurch gekennzeichnet,** dass der Hebel (26) aus einer langgezogenen, leicht sichelförmigen Platte besteht und an seiner oberen Kante zwei Paar Führungsflügel (30) aufweist, wobei das eine Führungsflügelpaar vorzugsweise am vorderen Ende und das zweite Führungsflügelpaar vorzugsweise in der hinteren Hälfte des Hebels (26) angeordnet ist.

5. Fahrradständer nach Anspruch 4, **dadurch gekennzeichent,** dass die Führungsflügel (30) zwecks Bildung einer V-förmigen Halterung in bezug auf die Oberfläche der Platte nach aussen geneigt sind und der Neigungswinkel zur Vertikalen vorzugsweise zwischen 30° und 45° liegt.

6. Fahrradständer nach einem der vorhergehenden Ansprüche, **dadurch gekennzeichnet,** dass der Schwenkarm (33) zwei langgezogene, parallel und unversetzt zueinander angeordnete Metallplatten (36) aufweist, deren gegenseitiger Abstand etwa 130 % der Breite der Führungsschiene (16) beträgt, und dass die Befestigungsvorrichtung (41 - 44) am hinteren Ende der beiden Metallplatten (36) vorgesehen ist.

7. Fahrradständer nach Anspruch 6, **dadurch gekennzeichnet,** dass die Befestigungsvorrichtung einen die Metallplatten (36) miteinander verbindenden, parallel zur Unterkante des hinteren Plattenabschnitts (38) jeder Metallplatte (36) sich erstreckenden Bügel, vorzugsweise einen kunststoffbeschichteten Metallbügel (41), aufweist, der gegen vorne gerichtet ist und dessen beide Schenkel am hinteren Ende je einer Metallplatte (36) fixiert sind.

8. Fahrradständer nach Anspruch 6 oder 7, **dadurch gekennzeichnet,** dass die Befestigungsvorrichtung je eine Bohrung (42) im hinteren Endabschnitt jeder Metallplatte (36) und zwei kleine Plättchen (43) aufweist, von denen je eines an der Aussenseite des hinteren Endabschnitts jeder Metallplatte (36), an der unteren Schmalseite der Metallplatte (36) teilweise hervorragend, fixiert ist, wobei im hervorragenden Abschnitt jedes Plättchens (43) eine durchgehende Bohrung (44) vorgesehen ist und wobei vorzugsweise ein Steckschloss durch die Bohrungen (42) der Metallplatten (36) oder durch die Bohrungen (44) der Plättchen (43) hindurchsteckbar ist.

9. Fahrradständer zumindest nach Anspruch 2, **dadurch gekennzeichnet,** dass sich der Hebel (26) im unbenützten Zustand des Fahrradständers (14) in einer nach oben geschwenkten Position und der Schwenkarm (33) in einer nach unten geschwenkten Position befindet und dass durch das Gewicht des auf dem Hebel (26) aufliegenden Vorderrades (22) des Fahrrades (15) der Hebel (26) nach unten drückbar und durch die Übertragung der Schwenkbewegung des Hebels (26) auf den Schwenkarm (33) letzterer so weit nach oben schwenkbar ist, bis zumindest ein Teil (41) der Befestigungsvorrichtung (41 - 44) am Fahrradrahmen anliegt.

## Claims

1. A bicycle stand with a support frame (1) for supporting at least one part of a bicycle (15) wherein there is at least one bicycle parking element (12) having a guide rail (16) that is attached to support frame (1) and accommodates at least part of a wheel of the bicycle (15), and a pivoting arm (33) that is pivotably attached to guide rail (16) with a device (41 - 44) for lockably attaching pivoting arm (33) to the bicycle frame.

2. The bicycle according to claim 1 wherein the front part of the guide rail in the direction in which bicycle (15) is pushed into bicycle stand (14) is contrived as a lever (26) that is pivotably attached to the rear part of guide rail (16) and connected to pivoting arm (33).

3. The bicycle stand according to claim 2 wherein one end portion of pivoting arm (33) is attached to the rear part of guide rail (16), with this end portion being connected with lever (26) by means of a connecting rod (32).

4. The bicycle stand according to claims 2 or 3 wherein lever (26) is made from a long, slightly sickle-shaped plate and has two pairs of guide wings (30) on its upper edge, with one pair of guide wings preferably being disposed towards the front end, and the second pair of guide wings preferably being disposed in the rear half of lever (26).

5. The bicycle stand according to claim 4 wherein guide wings (30) are inclined outwards to form a V-shaped holder in relation to the surface of the plate, with the angle of inclination to the vertical preferably being between 30° and 45°.

6. The bicycle stand according to one of the preceding claims wherein pivoting arm (33) has two long metal plates (36) disposed parallel and aligned in relation to each other and at a distance from each other corresponding to approximately 130% of the width of guide rail (16), and wherein the attaching device (41 - 44) is provided at the rear end of the two metal plates (36).

7. The bicycle stand according to claim 6, wherein the attaching device has a linking element, preferably a plastic-coated metal linking element (41), which connects metal plates (36) with each other whilst running parallel to the bottom edge of the rear plate section (38) of each metal plate (36), and which is oriented forwards and whose two arms are fixed to the rear end of each of metal plates (36).

8. The bicycle stand according to claims 6 or 7, wherein the attaching device comprises a hole (42) in the rear end section of each metal plate (36) and two small plates (43), each of which is fixed to the outside of the rear end section of each metal plate (36), to the bottom narrow side of metal plate (36), partially projecting, with there being a hole (44) in the projecting section of each small plate (43), and with in preference a bicycle lock being able to be passed through holes (42) in metal plates (36), or through holes (44) in small plates (43).

9. The bicycle stand according to at least claim 2, wherein when bicycle stand (14) is not in use, lever (26) is disposed in a position where it is pivoted upwards and pivoting arm (33) is disposed in a downwardly pivoted position, and wherein the weight of the front wheel (22) of bicycle (15) resting on lever (26) ensures that lever (26) can be pushed downwards, whereupon the pivoting movement of lever (26) is transmitted to pivoting arm (33) causing the latter to pivot upwards until at least a part (41) of attaching device (41 - 44) abuts against the bicycle frame.

## Revendications

1. Support de bicyclette, comportant un bâti destiné à soutenir au moins une partie d'une bicyclette (15), caractérisé par au moins un élément de fixation (12), qui comporte un rail de guidage (16), fixé au bâti (1), recevant une partie d'une roue de la bicyclette (15), ainsi qu'un bras pivotant (13), fixé en pivotement au rail de guidage (16) et possédant un dispositif (41-44) destiné à fixer d'une manière inviolable le bras pivotant (33) au cadre de la bicyclette.

2. Support de bicyclette selon la revendication 1, caractérisé en ce que la partie du rail de guidage située en avant dans la direction d'insertion de la bicyclette (15) dans le support de bicyclette (14) est configurée comme un levier (26), fixé en pivotement à la partie arrière du rail de guidage (16), et qui est relié au bras pivotant (33).

3. Support de bicyclette selon la revendication 2, caractérisé en ce que le bras pivotant (33) est, par un segment terminal, fixé à la partie arrière du rail de guidage (16), et que ce segment terminal est, par l'intermédiaire d'une tringlerie (32), relié au levier (26).

4. Support de bicyclette selon la revendication 2 ou 3, caractérisé en ce que le levier (26) est constitué d'une plaque de grande longueur, ayant approximativement la forme d'une faucille, et en son arête supérieure comporte deux paires d'ailes de guidage (30), l'une des paires d'ailes de guidage étant de préférence disposée au niveau de l'extrémité avant, et la deuxième paire d'ailes de guidage étant de préférence disposée dans la moitié arrière du levier (26).

5. Support de bicyclette selon la revendication 4, caractérisé en ce que les ailes de guidage (30) sont, pour former une attache en V, inclinées vers l'extérieure par rapport à la surface de la plaque, l'angle d'inclinaison par rapport à la verticale étant de préférence compris entre 30 et 45°.

6. Support de bicyclette selon l'une des revendications précédentes, caractérisé en ce que le bras pivotant (33) comporte deux plaques métalliques (36) de grande longueur, disposées parallèlement l'une à l'autre sans être décalées l'une par rapport à l'autre, plaques métalliques dont la distance réciproque est d'environ 130 % de la largeur du rail de guidage (16), et que le dispositif de fixation (41-44) est prévu au niveau de l'extrémité arrière des deux plaques métalliques (36).

7. Support de bicyclette selon la revendication 6, caractérisé en ce que le dispositif de fixation comporte un étrier, qui relie l'une à l'autre les plaques métalliques (36) et s'étend parallèlement à l'arête inférieure du segment de plaque arrière de chaque plaque métallique (36), de préférence un étrier métallique (41) enduit de plastique, qui est orienté vers l'avant et dont chacune des deux branches est, en son extrémité arrière, fixée à une plaque métallique (36).

8. Support de bicyclette selon la revendication 6 ou 7, caractérisé en ce que chaque dispositif de fixation comporte un trou (42) dans le segment terminal arrière de chaque plaque métallique (36) et deux petites plaquettes (43), dont l'une est fixée à la face extérieure du segment terminal arrière de chaque plaque métallique (36), en dépassant partiellement du petit côté inférieur de la plaque métallique (36), un trou traversant (44) étant prévu dans le segment en dépassement de chaque plaquette (43), de préférence un verrou pouvant être enfiché dans les trous (42) des plaques métalliques (36) ou dans le trous (44) des plaquettes (43).

9. Support de bicyclette selon au moins la revendication 2, caractérisé en ce que le levier (26), quand le support de bicyclette (14) n'est pas utilisé, se trouve dans une position pivotée vers le haut, et le bras pivotant (33) se trouve dans une position pivotée vers le bas, et ce que, sous l'effet du poids de la roue avant (22), qui s'appuie sur le levier (26), de la bicyclette (15), le levier (26) peut être appuyé vers le bas et, sous l'effet du transfert du mouvement de pivotement du levier (26) au bras pivotant (33), ce dernier peut pivoter vers le haut jusqu'à ce qu'au moins une partie (41) du dispositif de fixation (41-44) s'appuie contre le cadre de la bicyclette.
